# EUROPEAN PATENT SPECIFICATION

(11) **EP 3 043 302 B1**
(45) Date of publication and mention of the grant of the patent: **18.12.2019**
(21) Application number: 16150423.8
(22) Date of filing: 07.01.2016
(51) Int. Cl.: H04M 1/725, G06Q 10/10, H04L 12/58, G06F 3/0482, G06F 3/0484

(54) **ELECTRONIC DEVICE AND METHOD OF CONTROLLING DISPLAY OF INFORMATION**
ELEKTRONISCHE VORRICHTUNG UND VERFAHREN ZUR STEUERUNG DER ANZEIGE VON INFORMATIONEN
DISPOSITIF ÉLECTRONIQUE ET SON PROCÉDÉ DE CONTRÔLE DE CONTRÔLE D'AFFICHAGE D'INFORMATION

(30) Priority: 07.01.2015 US 201514591370
(43) Date of publication of application: 13.07.2016
(73) Proprietor: BlackBerry Limited, Waterloo, ON N2K 0A7 (CA)
(72) Inventor: GÄRDENFORS, Dan Zacharias, 211 58 Malmö (SE); ENGSTRÖM, Christopher, 222 41 Lund (SE)
(74) Representative: Vigand, Philippe

(56) References cited:
- EP-A1- 2 770 707
- US-A1- 2006 031 336
- US-A1- 2006 168 543

## Description

### FIELD OF TECHNOLOGY

The present disclosure relates to electronic devices including, but not limited to, portable electronic devices and controlling the display of information.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart phones, wireless personal digital assistants (PDAs), and laptop computers with wireless 802.11 or Bluetooth® capabilities.

Portable electronic devices such as PDAs or smart telephones are generally intended for handheld use and ease of portability. A touch-sensitive display, also known as a touchscreen display, is particularly useful on handheld devices, which may be small and have limited space for user input and output. With increased functionality of such portable electronic devices, the amount of information available for display continues to increase.

US 2006/0031336 A1 discloses systems and methods for processing attachments associated with electronic messages.

Improvements in devices and the display of information are desirable.

### BRIEF DESCRIPTION OF THE DRAWINGS

Embodiments of the present disclosure will now be described, by way of example only, with reference to the attached figures, in which:
FIG. 1 is a block diagram of an example of a portable electronic device in accordance with the disclosure;
FIG. 2 is a front view of an example of a portable electronic device including a list of communications in accordance with the disclosure;
FIG. 3 is a flowchart illustrating a method of identifying content from communications and controlling the display of the content on the portable electronic device of FIG. 1 in accordance with the disclosure;
FIG. 4 through FIG. 6 illustrate examples of displayed content and control of the displayed content in accordance with the flowchart of FIG. 3.

### DETAILED DESCRIPTION

The following describes an electronic device and a method of controlling display of information on a portable electronic device. The method includes detecting, at the portable electronic device, an input to enter an attachment and link view, in response to detecting the input to enter the attachment and link view, scanning communications received at the portable electronic device for content comprising attachments and links, the communications including messages received in a plurality of messaging applications, and displaying previews of the attachments and links from the plurality of messaging applications. The display of the previews of attachments and links from the plurality of messaging applications is dependent on an active application at the time of receipt of the input to enter the attachment and link view.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device as described herein. Examples of electronic devices include mobile, or handheld, wireless communication devices such as cellular phones, cellular smart-phones, wireless organizers, personal digital assistants, wirelessly enabled notebook computers, tablet computers, mobile internet devices, electronic navigation devices, and so forth.

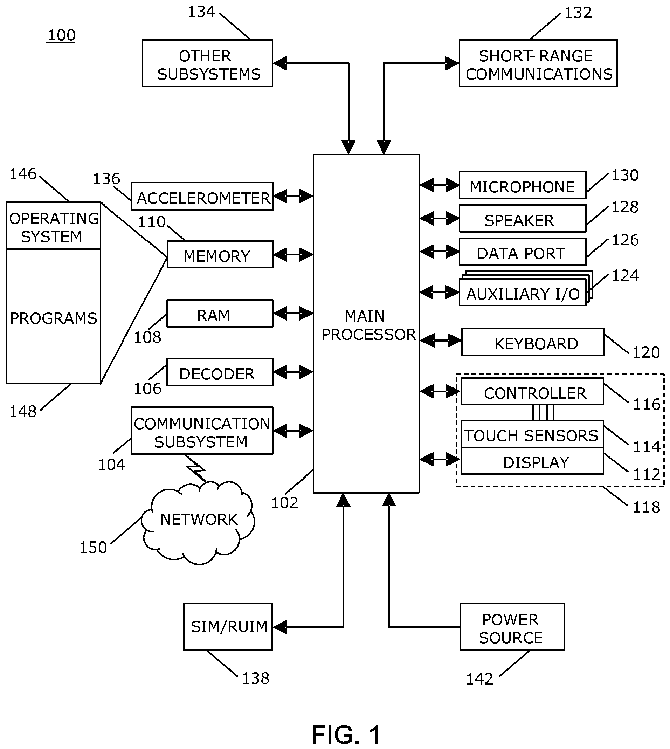

A block diagram of an example of an electronic device 100, which in the present example is a portable electronic device, is shown in FIG. 1. The electronic device 100 includes multiple components, such as a processor 102 that controls the overall operation of the electronic device 100. Communication functions, including data and voice communications, are performed through a communication subsystem 104. Data received by the electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the electronic device 100.

The processor 102 interacts with other components, such as a Random Access Memory (RAM) 108, memory 110, a touch-sensitive display 118, a keyboard 120, an auxiliary input/output (I/O) subsystem 124, a data port 126, a speaker 128, a microphone 130, short-range communications 132 and other device subsystems 134. The speaker 128, also referred to as an earpiece speaker, is utilized to output audible signals when a user's ear is very close to the speaker 128. Although not shown, the processor may also interact with a loudspeaker, for example, for handsfree use. The keyboard 120 includes a plurality of keys, which may be mechanical keys that include mechanical switches or contacts for input to the electronic device 100 when a mechanical key of the keyboard is depressed by a sufficient amount to oppose a bias of the mechanical key. Alternatively, or in addition, the keys of the keyboard may include touch sensors coupled to a controller to detect touch input thereon.

The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the electronic device 100 may utilize a Subscriber Identity Module or a Removable User Identity Module (SIM/RUIM) card 138 for communication with a network, such as the wireless network 150. Alternatively, user identification information may be programmed into memory 110.

The electronic device 100 includes an operating system 146 and software programs, applications, or components 148 that are executed by the processor 102 and are typically stored in a persistent, updatable store such as the memory 110. Additional applications or programs may be loaded onto the electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive touch-sensitive display that includes a plurality of capacitive touch sensors 114. Capacitive touch sensors 114 include drive electrodes, also known as transmission electrodes, and sense electrodes, also known as receive electrodes. The drive electrodes generally extend in one direction and cross over or under the sense electrodes, which generally extend in another direction, generally at right angles to the direction that the drive electrodes extend, to form a grid pattern. The drive electrodes are spaced from the sense electrodes by a dielectric material. The points at which the drive electrodes and the sense electrodes cross each other are referred to as nodes. The drive and sense electrodes may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

By repeatedly scanning the electrodes of the touch-sensitive display 118 to detect touches, one or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

The touch-sensitive display 118 includes a display area in which information may be displayed, and a non-display area extending around the periphery of the display area. Information is not displayed in the non-display area by the display. The non-display area is utilized to accommodate, for example, electronic traces or electrical connections, adhesives or other sealants, and/or protective coatings around the edges of the display area. The non-display area may be referred to as an inactive area and is not part of the physical housing or frame of the electronic device. Typically, no pixels of the display are in the non-display area, thus no image can be displayed by the display 112 in the non-display area. Optionally, a secondary display, not part of the primary display 112, may be disposed in the non-display area. Touch sensors including drive electrodes and sense electrodes may be disposed in the non-display area, which touch sensors may be extended from the touch sensors in the display area or may be distinct or separate touch sensors from the touch sensors in the display area. A touch, including a gesture, may be associated with, i.e., performed on, the display area, the non-display area, or both areas. The touch sensors including the drive electrodes and the sense electrodes may extend across substantially the entire non-display area or may be disposed in only part of the non-display area.

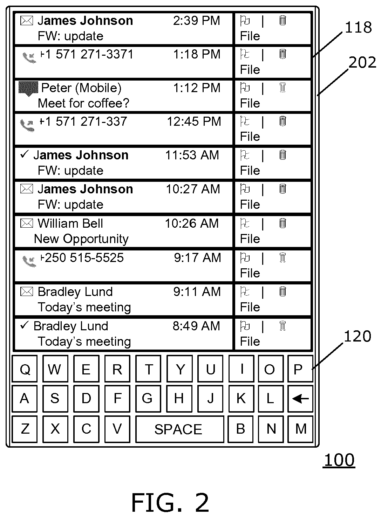

An example of an electronic device 100 is shown in FIG. 2. In the example of FIG. 2, the electronic device 100 includes a housing 202 in which the touch-sensitive display 118 is disposed. The housing 202 is utilized to enclose components such as the components shown in FIG. 1. The keyboard 120 is disposed below the touch-sensitive display 118 in the orientation illustrated in FIG. 2.

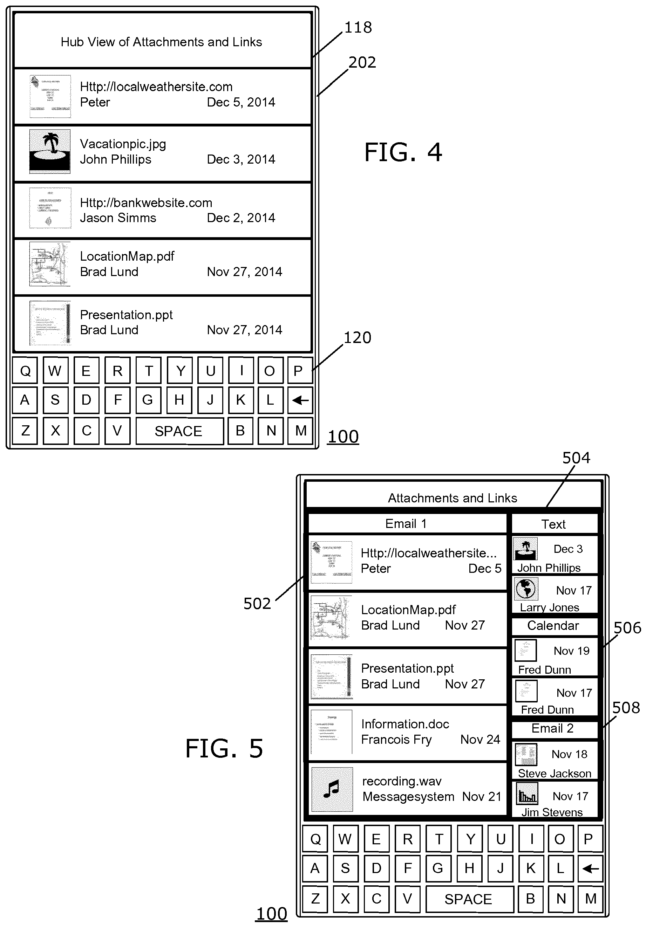

For the purpose of the example of FIG. 2, a combined list of communications sent and received at the portable electronic device 100 is displayed on the touch-sensitive display 118 of the portable electronic device 100. The combined list of communications may include all communications sent and received at the portable electronic device 100 or may selectively include communication types. For example, the types of communications that are included in the combined list may be user-selectable. In the example illustrated in FIG. 4, the combined list includes email messages, text messages, and cellular telephone calls. The list may also include voice-over-IP calls, social media notifications, calendar invitations, and other communications.

The communications sent from and received at the portable electronic device 100 may include attachments or links or both attachments and links. For example, email messages may include attachments of various formats, such as word processing documents, portable document format (PDF) documents, editable slideshow documents such as PowerPoint® (PPT) presentations, audio files, pictures or images, for example in JPEG, GIF, BMP, or TIFF format, spreadsheets, videos, and any other suitable attachment. Email messages may also include links, also referred to as Web links and hyperlinks, or Uniform Resource Locators (URLs) to various sites for viewing content at those sites.

Calendar events, including events such as meetings or appointments stored in a calendaring application on the portable electronic device may also include attachments or links or both attachments and links. Other message types, such as text messages and instant messages may also include attachments or links or both attachments and links.

Attachments and links may be received in or along with communications of various communication types. Locating specific attachment and links may be difficult in an extensive list of received communications. In particular, the location of a link and the identification of received communications, such as an email, a text message, or an instant message, that include a link may not be readily determined from a view of a list of communications.

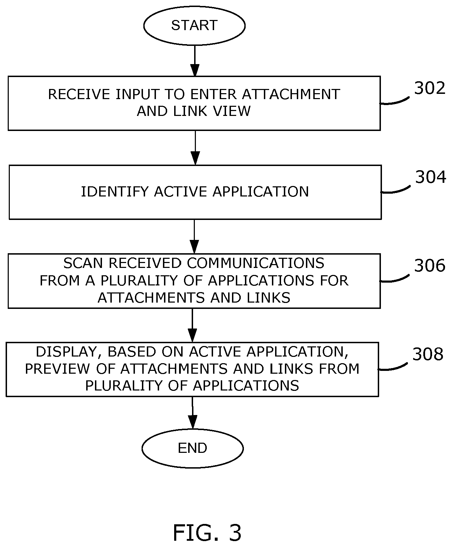

A flowchart illustrating a method of controlling display of information on an electronic device is shown in FIG. 3. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor 102 of the electronic device to perform the method may be stored in a computer-readable storage medium, such as a non-transitory computer-readable medium.

As indicated above, communications received at the portable electronic device 100 may include attachments and links. Communications may include links or may include attachments, such as word processing documents, portable document format (PDF) documents, editable slideshow documents, audio files, pictures or images, spreadsheets, or videos or a combination of attachments of various types and links.

An input to enter an attachment and link view is received at 302. The input may be, for example, a gesture such as shaking the portable electronic device 100 from side to side, which is detected by the portable electronic device 100 utilizing the accelerometer 136. Alternatively, the input may be a gesture on the touch-sensitive display 118, a selection from a menu or submenu displayed on the touch-sensitive display, or any other suitable input.

The active application at the time of receipt of the input, if any, is identified at 304. The active application at the time of receipt of the input is the application running at the time the input is received and for which information is displayed on the touch-sensitive display. More than one application may be running at the time the input is received. The active application is the application for which information is displayed in the foreground on the touch-sensitive display 118. The application may be, for example, any one of the software programs, applications, or components 148. The associated account may also be identified. For example, when the active application is an email application and more than one email account is enabled on the portable electronic device such that email messages are received for more than one email account, the active email account may also be identified.

The active application may be identified prior to receipt of the input to enter the attachment and link view is received. For example, the active application may be identified when the processor 102 executes the software program, application, or component. Thus, when the gesture is received to enter the attachment and link view, the active application is the application executed by the processor.

Received communications are scanned or analyzed by the portable electronic device 100 for attachments and links at 306. Thus, any attachments and any links included with received communications are identified. The attachments and links may include all attachments and all links for all received communications that are stored on the portable electronic device 100. Alternatively, the attachments and links may include attachments and links for received communications in a set period of time, such as attachments and links received over the past 7 days. Optionally, a set number of attachments and links may be identified or set numbers of attachments and links for each communication type may be identified. The attachments and links are ordered based on a criteria, such as time and date of receipt.

The attachments and links may be attachments and links in a calendaring application or in messaging applications or both calendaring and messaging applications. Examples of such messaging applications include an email messaging application, a text messaging application, and an instant messaging application.

Previews of attachments and links identified at 306 are displayed on the touch-sensitive display 118 at 308. The attachments and links are displayed in an area on the touch-sensitive display that is dependent on the active application at the time of receipt of the input to enter the attachment and link view. For example, the area in which previews of the attachments and links from communications received in relation to the application identified as the active application at 304 may be larger than each of the areas in which previews of attachments or links from communications received in other applications are displayed. Optionally, the previews of attachments and links may also differ in size.

When no application is active at the time of receipt of the input to enter the attachment and link view, previews of the attachments may be displayed in equal sized areas for each application and the attachments for each application may be ordered, based on any suitable criteria. For example, the attachments and links may be ordered based on the time and date of receipt or based on the attachment type or link. Thus, a list may be created and ordered for each application type and may be created for each account. More attachments and links may be identified than can be displayed on the display at one time. To facilitate viewing of further attachments or links, each list may be scrollable to view other attachments and links that are further down in the list.

Alternatively, the attachments and links may be displayed in a consolidated list, for example, in order based on time and date of receipt. The consolidated list may also be scrollable.

The previews of attachments and links may include thumbnail views of, for example, a first page of a documents, picture or image, video, associated artwork, content downloaded from a link, or any other suitable view.

In addition to the preview, other information may also be displayed at 308, including, for example, information identifying the sender, information identifying the application associated with the communication to which the attachment was attached or in which the link was included, and the date of receipt of the communications, the time of receipt, or any other suitable information. The information identifying the sender may include a name, a number, a message address such as an email address, a cellular telephone number, an associated picture or profile image, or any other suitable information.

Each preview or associated information is selectable to launch an application to view the associated attachment or web page associated with the link.

Reference is made to FIG. 4 through FIG. 6 with continued reference to FIG. 3 to describe examples of displayed content and control of the displayed content. For the purpose of the example shown in FIG. 4, the portable electronic device 100 is rapidly moved or shaken to enter an attachment and link view at 302. The shaking is detected utilizing the accelerometer 136. The input, or shaking, is received when the portable electronic device 100 is displaying the home screen and no application is active or when the portable electronic device 100 is displaying the consolidated list of messages shown in FIG. 2 and no application is active. At 304, the portable electronic device 100 identifies that no application is active at the time of receipt of the input.

Received communications are scanned by the portable electronic device 100 to identify all attachments and links in all communications received by the electronic device 100 and still resident on the portable electronic device 100 at 306. Previews of the attachments and links are displayed in a list at 308. Because the input to enter the attachment and link view is received when no application is active on the portable electronic device 100, all attachments and links are treated equally and the previews of the attachments and links are displayed in order of receipt, regardless of the communication type or application associated with the communication with which the content, i.e., the attachment or the link, was included.

In the present example, 5 previews are displayed as thumbnails in order of receipt. Other numbers of previews may be displayed depending on the size of the display 112 and the size of the previews, and related information. The thumbnails include portions of webpages obtained from links, an image, and first pages of documents. In addition to the thumbnails, URLs, or document names are included in the list, an identification of the sender, as well as the date of receipt.

The consolidated list may be scrollable, for example, by a scrolling gesture on the touch-sensitive display 118, to display other previews of attachments and links when more attachments and links are identified than are displayable at one time on the touch-sensitive display 118.

For the purpose of the example shown in FIG. 5, a gesture is received on the touch-sensitive display 118 to enter an attachment and link view at 302. The gesture is detected utilizing the touch-sensitive display 118. The gesture is received when the portable electronic device 100 is displaying email messages received from one of the active email accounts on the portable electronic device 100. At 304, the portable electronic device 100 identifies the email application as the active application at the time of receipt of the input and the first email account is the active email account.

Received communications are scanned by the portable electronic device 100 to identify attachments and links in communications received by the electronic device 100 and still resident on the portable electronic device 100 at 306. Previews of the attachments and links are displayed depending on the application associated with the communication with which the content was included.

In response to identifying that the active application at the time of receipt of the input is the email messaging application and email messages associated with the first email account are displayed on the portable electronic device 100, previews of the attachments from the first email account of the email messaging application are displayed in a larger area than the areas in which previews of the attachments from other accounts and applications are displayed. In this example, the previews of the attachments from the first email account are displayed at a larger size than the previews of the attachments from other accounts and applications.

As illustrated, the previews of attachments and links from the "Email 1" account are larger than the attachments from the text application, the attachments from the calendar application, and the attachments from the "Email 2" account. In addition, the area for display of the attachments and links from the "Email 1" account 502, is greater than the area for display of the attachments and links from the text messaging application 504, or the area for display of the attachments and links from the calendaring application 506, or the area for display of attachments and links from the "Email 2" account 508.

Each list may be scrollable, for example, by a scrolling gesture in the respective area on the touch-sensitive display 118, to display other previews of attachments and links when more attachments and links are identified than are displayable at one time in the associated area on the touch-sensitive display 118.

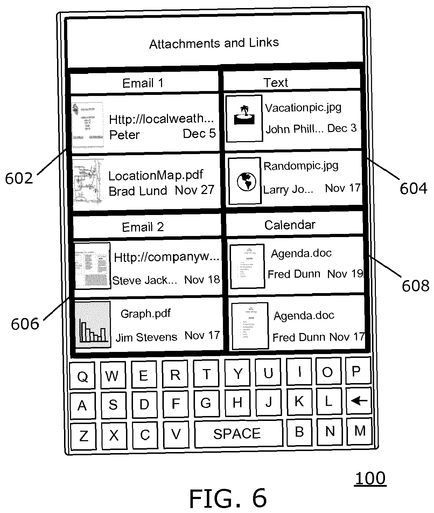

FIG. 6 shows an alternative view of attachments when the input to enter the attachment and link view is received when no application is active. For the purpose of the example of FIG. 6, an input is received when the portable electronic device 100 is displaying the home screen and, thus, no application is active. At 304, the portable electronic device 100 identifies that no application is active at the time of receipt of the input.

Received communications are scanned by the portable electronic device 100 to identify all attachments and links in all communications received by the electronic device 100 and still resident on the portable electronic device 100 at 306. Previews of the attachments and links are displayed in lists at 308. Because the input to enter the attachment and link view is received when no application is active on the portable electronic device 100, all attachments and links are treated equally and the previews of the attachments and links are displayed based on the account or application associated with the communication with which the content, i.e., the attachment or the link, was included.

In this example, 8 previews are displayed as thumbnails, with two previews displayed in an area associated with an Email 1 account 602, two previews displayed in an area associated with a text message application 604, two previews displayed in an area associated with an Email 2 account 606, and two previews displayed in an area associated with a calendaring application 608. Other suitable numbers of previews may be displayed depending on the size of the display 112 and the size of the previews, and related information. Thus, in response to receipt of the input to enter the attachment and link view from a home screen of the portable electronic device 100, the thumbnail previews of the attachments from each of the applications and accounts are displayed in generally equivalent sized areas. The previews may be scrollable, for example, by a scrolling gesture in the associated area on the touch-sensitive display 118, to display other previews of attachments and links when more attachments and links are identified than are displayable at one time in the associated area on the touch-sensitive display 118.

In the examples described above, the previews of the attachments and links are displayed in a list or lists on the portable electronic device 100 at 308. Optionally, the previews of the attachments and links may be displayed on a display coupled to a personal computer, such as a desktop computer or laptop computer. Thus, the portable electronic device 100 may communicate with the personal computer, for example, through the auxiliary I/O 124, the data port 126, the network 150, or through short-range communications 132. Thus, an input to enter the attachment and link view, for example, a gesture such as shaking the portable electronic device 100 from side to side, is received at the portable electronic device at 302. In response to receiving the input, the active application on the portable electronic device 100 is identified at 304, the received communications are scanned or analyzed by the portable electronic device 100 for attachments and links at 306, the portable electronic device 100 communicates with the personal computer, and the previews of the attachments and links are displayed on the display of the personal computer at 308. The previews of attachments and links may be displayed similar to the examples described above with reference to FIG. 4 through FIG. 6. Because the size of the display of the personal computer is much larger than the portable electronic device, many more previews may be displayed on the display of the personal computer than the number of previews displayed on the touch-sensitive display 118 of the portable electronic device 100. Alternatively, or in addition, the previews may be displayed at a larger size on the display of the personal computer compared to the previews displayed on the portable electronic device, facilitating identification of links and attachments and their content.

Advantageously, the display of previews of attachments and links received utilizing various communication applications, is dependent on which application is active when the input to enter the preview of attachments and links is received. The previews facilitate identification of an attachment. By displaying the previews dependent on which application is active, the previews may be sorted in a view that further facilitates identification of an attachment.

The scope of the claims should not be limited by the preferred embodiments set forth in the examples, but should be given the broadest interpretation consistent with the description as a whole.

## Claims

1. A method of identifying content from communications and controlling the display of the content on a portable electronic device (100), the method comprising:
detecting (302), at the portable electronic device (100), an input to enter an attachment and link view;
in response to detecting the input to enter the attachment and link view:
scanning (306) communications received at the portable electronic device (100) for content comprising attachments and links, the communications including messages received in a plurality of messaging applications;
displaying (308) previews of the attachments and links from the plurality of messaging applications on a display,
wherein the display of the previews of attachments and links from the plurality of messaging applications is dependent on an active application at the time of receipt of the input to enter the attachment and link view.

2. The method according to claim 1, wherein the plurality of messaging applications comprises two or more of an email messaging application, a text messaging application, and an instant messaging application.

3. The method according to claim 1 or claim 2, comprising, in response to identifying that the active application at the time of receipt of the input to enter the attachment and link view is one of the messaging applications, displaying previews of the attachments from the one of the messaging applications in a larger area than each of the areas in which previews of the attachments from other of the messaging applications are displayed.

4. The method according to claim 1 or claim 2, comprising, in response to identifying that the active application at the time of receipt of the input to enter the attachment and link view is one of the messaging applications, displaying previews of the attachments from the one of the messaging applications at a larger size than the previews of the attachments from each other of the messaging applications.

5. The method according to claim 1 or claim 2, comprising, in response to identifying the input to enter the attachment and link view is received from a home screen of the portable electronic device (100), displaying previews of the attachments from each of the messaging applications in generally equivalent sized areas.

6. The method according to claim 1 or claim 2, comprising, in response to identifying the input to enter the attachment and link view is received from a home screen of the portable electronic device (100), displaying previews of the attachments from all of the messaging applications in a consolidated list.

7. The method according to any preceding claim, wherein the communications includes calendar events.

8. The method according to any preceding claim, wherein a sender of the communication is identified along with each of the displayed previews.

9. The method according to any preceding claim, wherein each of the previews comprises a thumbnail view of an attached file or a thumbnail view of a webpage associated with a link.

10. A computer-readable storage medium having computer-readable code executable by a portable electronic device (100) to perform a method according to any of claims 1 to 9.

11. A portable electronic device (100) comprising:
a communication system for sending and receiving communications;
at least one input device for receiving input at the portable electronic device (100);
a display (118) for displaying information including received communications; and
a processor (102) coupled to the communication system, the input device, and the display (118);
wherein the portable electronic device (100) is configured to perform a method according to any of claims 1 to 9.

## Patentansprüche

1. Verfahren zum Identifizieren von Inhalt aus Kommunikationen und Steuern der Anzeige des Inhalts auf einer tragbaren elektronischen Vorrichtung (100), das Verfahren umfassend:
Erkennen (302), an der tragbaren elektronischen Vorrichtung (100), einer Eingabe zum Eingeben einer Anhang- und Linkansicht;
in Reaktion auf das Erkennen der Eingabe zum Eingeben einer Anhang- und Linkansicht:
Absuchen (306) von Kommunikationen, die an der tragbaren elektronischen Vorrichtung (100) empfangen werden, nach Inhalt, der Anhänge und Links umfasst, wobei die Kommunikationen Nachrichten enthalten, die in mehreren Nachrichtenübermittlungsanwendungen empfangen werden;
Anzeigen (308) von Voransichten der Anhänge und Links von den mehreren Nachrichtenübermittlungsanwendungen auf einer Anzeige,
wobei die Anzeige der Voransichten der Anhänge und Links von den mehreren Nachrichtenübermittlungsanwendungen von einer aktiven Anwendung zur Empfangszeit der Eingabe zum Eingeben der Anhang- und Linkansicht abhängt.

2. Verfahren nach Anspruch 1, wobei die mehreren Nachrichtenübermittlungsanwendungen zwei oder mehr einer E-Mail-Nachrichtenübermittlungsanwendung, einer Textnachrichtenübermittlungsanwendung und einer Sofortnachrichtenübermittlungsanwendung umfasst.

3. Verfahren nach Anspruch 1 oder 2, umfassend, in Reaktion auf das Identifizieren, dass die aktive Anwendung zur Empfangszeit der Eingabe zum Eingeben der Anhang- und Linkansicht eine der Nachrichtenübermittlungsanwendungen ist, Anzeigen von Voransichten der Anhänge von der einen der Nachrichtenübermittlungsanwendungen in einem größeren Bereich als jedem der Bereiche, in denen Voransichten der Anhänge von anderen der Nachrichtenübermittlungsanwendungen angezeigt werden.

4. Verfahren nach Anspruch 1 oder 2, umfassend, in Reaktion auf das Identifizieren, dass die aktive Anwendung zur Empfangszeit der Eingabe zum Eingeben der Anhang- und Linkansicht eine der Nachrichtenübermittlungsanwendungen ist, Anzeigen von Voransichten der Anhänge von der einen der Nachrichtenübermittlungsanwendungen in einer größeren Größe als die Voransichten der Anhänge von jeder anderen der Nachrichtenübermittlungsanwendungen.

5. Verfahren nach Anspruch 1 oder 2, umfassend, in Reaktion darauf, dass das Identifizieren der Eingabe zum Eingeben der Anhang- und Linkansicht von einem Startbildschirm der tragbaren elektronischen Vorrichtung (100) empfangen wird, Anzeigen von Voransichten der Anhänge von jeder der Nachrichtenübermittlungsanwendungen in im Allgemeinen äquivalent bemessenen Bereichen.

6. Verfahren nach Anspruch 1 oder 2, umfassend, in Reaktion darauf, dass das Identifizieren der Eingabe zum Eingeben der Anhang- und Linkansicht von einem Startbildschirm der tragbaren elektronischen Vorrichtung (100) empfangen wird, Anzeigen von Voransichten der Anhänge von allen der Nachrichtenübermittlungsanwendungen in einer konsolidierten Auflistung.

7. Verfahren nach einem der vorhergehenden Ansprüche, wobei die Kommunikationen Kalenderereignisse beinhalten.

8. Verfahren nach einem der vorhergehenden Ansprüche, wobei ein Sender der Kommunikation zusammen mit jeder der angezeigten Voransichten identifiziert wird.

9. Verfahren nach einem der vorhergehenden Ansprüche, wobei jede der Voransichten eine Miniaturbildansicht einer angehängten Datei oder eine Miniaturbildansicht einer Webseite, welche mit einem Link assoziiert ist, umfasst.

10. Maschinenlesbares Speichermedium mit maschinenlesbarem Code, der durch eine tragbare elektronische Vorrichtung (100) zum Ausführen eines Verfahrens nach einem der Ansprüche 1 bis 9 ausführbar ist.

11. Tragbare elektronische Vorrichtung (100), umfassend:
ein Kommunikationssystem zum Senden und Empfangen von Kommunikationen;
zumindest ein Eingabegerät zum Empfangen einer Eingabe an der tragbaren elektronischen Vorrichtung (100);
eine Anzeige (118) zum Anzeigen von Information, die empfangene Kommunikationen enthält; und
einen Prozessor (102), der an das Kommunikationssystem, das Eingabegerät und die Anzeige (118) gekoppelt ist;
wobei die tragbare elektronische Vorrichtung (100) zum Ausführen eines Verfahrens nach einem der Ansprüche 1 bis 9 konfiguriert ist.

## Revendications

1. Procédé d'identification de contenu à partir de communications et de contrôle de l'affichage du contenu sur un dispositif électronique portable (100), le procédé comprenant :
la détection (302), au niveau du dispositif électronique portable (100), d'une entrée destinée à accéder à une vue de pièce jointe et de lien ;
en réponse à la détection de l'entrée pour accéder à la vue de pièce jointe et de lien :
le balayage (306) des communications reçues au niveau du dispositif électronique portable (100) afin de trouver un contenu comprenant des pièces jointes et des liens, les communications comprenant des messages reçus dans une pluralité d'applications de messagerie ;
l'affichage (308) de prévisualisations des pièces jointes et des liens provenant de la pluralité d'applications de messagerie sur un affichage,
dans lequel l'affichage des prévisualisations des pièces jointes et des liens provenant de la pluralité d'applications de messagerie dépend d'une application active au moment de la réception de l'entrée pour accéder à la vue de pièce jointe et de lien.

2. Procédé selon la revendication 1, dans lequel la pluralité d'applications de messagerie comprend deux ou plus d'une application de messagerie électronique, d'une application de messagerie texte, et d'une application de messagerie instantanée.

3. Procédé selon la revendication 1 ou 2, comprenant, en réponse à l'identification du fait que l'application active au moment de la réception de l'entrée pour accéder à la vue de pièce jointe et de lien soit l'une des applications de messagerie, l'affichage des prévisualisations des pièces jointes provenant de l'une des applications de messagerie dans une zone plus grande que chacune des zones dans lesquelles les prévisualisations des pièces jointes provenant d'une autre des applications de messagerie sont affichées.

4. Procédé selon la revendication 1 ou 2, comprenant, en réponse à l'identification du fait que l'application active au moment de la réception de l'entrée pour accéder à la vue de pièce jointe et de lien soit l'une des applications de messagerie, l'affichage des prévisualisations des pièces jointes provenant de l'une des applications de messagerie dans une taille plus grande que les prévisualisations des pièces jointes provenant de chaque autre des applications de messagerie.

5. Procédé selon la revendication 1 ou 2, comprenant, en réponse à l'identification du fait que l'entrée pour accéder à la vue de pièce jointe et de lien soit reçue à partir d'un écran d'accueil du dispositif électronique portable (100), l'affichage de prévisualisations des pièces jointes provenant de chacune des applications de messagerie dans des zones de taille généralement équivalente.

6. Procédé selon la revendication 1 ou 2, comprenant, en réponse à l'identification du fait que l'entrée pour accéder à la vue de pièce jointe et de lien soit reçue à partir d'un écran d'accueil du dispositif électronique portable (100), l'affichage de prévisualisations des pièces jointes provenant de l'ensemble des applications de messagerie dans une liste groupée.

7. Procédé selon l'une quelconque des revendications précédentes, dans lequel les communications comprennent des événements de calendrier.

8. Procédé selon l'une quelconque des revendications précédentes, dans lequel un expéditeur de la communication est identifié avec chacune des prévisualisations affichées.

9. Procédé selon l'une quelconque des revendications précédentes, dans laquelle chacune des prévisualisations comprend une vue miniature d'un fichier joint ou une vue miniature d'une page Web associée à un lien.

10. Support de stockage lisible par un ordinateur qui contient un code exécutable par un ordinateur qui peut être exécuté par un dispositif électronique portable (100) afin d'exécuter un procédé selon l'une quelconque des revendications 1 à 9.

11. Dispositif électronique portable (100) comprenant :
un système de communication destiné à envoyer et recevoir des communications ;
au moins un dispositif d'entrée destiné à recevoir une entrée au niveau du dispositif électronique portable (100) ;
un affichage (118) destiné à afficher des informations comprenant les communications reçues ;
et
un processeur (102) relié au système de communication, au dispositif d'entrée, et à l'affichage (118) ;
dans lequel le dispositif électronique portable (100) est configuré pour exécuter un procédé selon l'une quelconque des revendications 1 à 9.
